# EUROPEAN PATENT APPLICATION

(11) **EP 4 206 291 A1**
(43) Date of publication of application: **05.07.2023**
(21) Application number: 21861517.7
(22) Date of filing: 24.08.2021
(51) Int. Cl.: C09D 11/16

(54) **INK COMPOSITION FOR WRITING IMPLEMENT, WRITING IMPLEMENT, AND CARTRIDGE INK FOR WRITING IMPLEMENT**

(30) Priority: 26.08.2020 JP 2020142853
(71) Applicant: Kabushiki Kaisha Pilot Corporation (also trading as Pilot Corporation), Tokyo 104-8304 (JP)
(72) Inventor: NISHIKAWA, Tomoaki, Tokyo 104-8304 (JP)
(74) Representative: Elkington and Fife LLP
(86) International application number: PCT/JP2021/030898
(87) International publication number: WO 2022/045092

(57) **Abstract**

Disclosed herein are a water-based ink composition for writing instruments excellent not only in handwriting fastness, such as handwriting water resistance, and dispersion stability but also in various properties such as dry-up resistance and handwriting density and a writing instrument using the same.

The water-based ink composition for writing instruments contains a self-dispersible pigment, α-glucan or an α-glucan derivative, and water. The writing instrument contains the water-based ink composition for writing instruments. Also disclosed herein is a cartridge ink for writing instruments containing the water-based ink composition for writing instruments.

## Description

### TECHNICAL FIELD

The present invention relates to a water-based ink composition for writing instruments, a writing instrument, and a cartridge ink for writing instruments.

### BACKGROUND ART

A writing instrument to form handwriting by an ink composition forms handwriting by discharging an ink composition containing a colorant from its nib onto an object to be written. Depending on the purpose, there are various types of ink compositions such as a coating composition for forming a coating layer to cover a substrate surface and an ink composition for printers, such as ink-jet printers, to form an image on an object by ejecting microdroplets. However, unlike such ink compositions, an ink composition for writing instruments is required to have physical properties for discharging an appropriate amount of an ink composition onto an object to be written by utilizing capillary action or the like.

Colorants contained in ink compositions can roughly be classified into dyes and pigments and are selected depending on the purpose. Dyes tend to achieve high homogeneity of ink compositions and are widely used for various ink compositions. However, dyes generally tend to be poor in handwriting fastness such as water resistance and light resistance of handwriting and are therefore expected to be improved. On the other hand, pigments are excellent in handwriting fastness but need to be improved in terms of dispersion stability of an ink composition. Particularly, ink compositions used for fountain pens are required to have low viscosity because ink is guided by capillary action to a nib through a pen core including a comb groove to temporarily store ink, an ink passageway, and an air passageway. Such ink compositions having low viscosity are expected to be improved particularly in their dispersion stability. In many cases, dispersion stability is effectively improved by increasing the viscosity of an ink composition with the use of a thickening agent, but it is difficult to use an additive having the effect of increasing viscosity in combination with an ink composition required to have low viscosity.

Further, ink compositions are required to have, in addition to the above-described handwriting fastness, such as water resistance and light resistance of handwriting, and dispersion stability, handwriting density, dry-up resistance (performance at the beginning of writing), handwriting fixability, writing quality (handwriting with little blurring, bleeding, and bleed-through), ink invertibility in an ink storage body, and dripping resistance.

When a pigment is used as a colorant, as described above, dispersion stability may be insufficient, and therefore various attempts have been made to improve it. However, conventional ink compositions for writing instruments using pigment have room for improvement in properties other than handwriting fastness. Further, there have been demands for development of ink compositions satisfying various performance requirements at high levels at the same time.

In order to solve such problems, ink compositions have been proposed which have improved dry-up resistance by adding, to ink, a polyhydric alcohol solvent such as ethylene glycol or glycerin and any type of moisturizing agent such as urea or a urea derivative (e.g., Patent Literatures 1 and 2).

However, such ink compositions have room for improvement in water resistance and fixability of handwriting because excellent dry-up resistance can be achieved depending on the type of moisturizing agent added or the amount of the moisturizing agent added, but there is a case where, when a water droplet is attached to obtained handwriting, it is difficult to visually recognize the handwriting due to bleeding or fixability of handwriting onto a surface to be written is reduced so that when scratched, the handwriting gets dirty.

Therefore, there have been demands for a water-based ink composition for writing instruments and a writing instrument which can achieve excellent handwriting fastness such as water resistance without impairing various properties.

### PRIOR ART DOCUMENTS

### PATENT DOCUMENTS

[Patent document 1] JP 08-127446 A
[Patent document 2] JP 2004-217730 A
[Patent document 3] JP 61-247774 A
[Patent document4] JP 2016-069490 A

### SUMMARY OF THE INVENTION

### PROBLEM TO BE SOLVED BY THE INVENTION

In order to solve the above problems, it is an object of the present invention to provide a water-based ink composition for writing instruments which is excellent in dispersion stability as well as handwriting fastness, such as handwriting water resistance, and handwriting color developability and which further has other properties preferable for writing instruments and a writing instrument using the same.

### MEANS FOR SOLVING PROBLEM

The present invention is directed to a water-based ink composition for writing instruments, the composition containing a self-dispersible pigment, α-glucan or an α-glucan derivative, and water.

The present invention is also directed to a writing instrument containing the water-based ink composition for writing instruments.

The present invention is also directed to a cartridge ink for writing instruments, the cartridge ink containing the water-based ink composition for writing instruments.

### EFFECT OF INVENTION

According to the present invention, it is possible to provide a water-based ink composition for writing instruments which is excellent in various properties such as handwriting density in addition to handwriting fastness, such as handwriting water resistance, and dispersion stability and a writing instrument using the same.

### DETAILED DESCRIPTION

Hereinbelow, an embodiment of the present invention will be described in detail. It should be noted that in this description, "part(s)" representing a composition, "%", and "ratio" are based on mass unless otherwise specified, and a content is a mass percentage of a constituent with based on the mass of an ink composition.

### <<Water-based ink composition for writing instruments>>

A water-based ink composition for writing instruments according to the present invention (hereinafter sometimes simply referred to as an "ink composition") contains a self-dispersible pigment, α-glucan or an α-glucan derivative, and water. The constituents of the ink composition according to the present invention will be described in detail below.

### <Self-dispersible pigment>

The ink composition according to the present invention contains a self-dispersible pigment as a colorant. The self-dispersible pigment is excellent in dispersion stability and further can leave handwriting excellent in color developability and water resistance.

The self-dispersible pigment can disperse in an aqueous medium without using a pigment dispersant for dispersing pigment particles. A specific example of such a self-dispersible pigment is one obtained by subjecting the surfaces of particles of a pigment to physical treatment or chemical treatment so that the surface of the pigment has hydrophilic functional groups (hydrophilic groups).

In the present invention, the self-dispersible pigment is used, and therefore it is not necessary to use a pigment dispersant. The pigment dispersant generally tends to inhibit color developability of handwriting, and therefore the ink composition according to the present invention not containing it is likely to achieve handwriting excellent in color. It should be noted that particularly, a resin-based pigment dispersant, which is one of pigment dispersants generally used, also has the function of fixing a pigment onto an object to be written, but in the present invention, another component such as an α-glucan performs the function of fixing a pigment, and therefore handwriting water resistance and handwriting fixability are also excellent.

Particularly, in the present invention, self-dispersible carbon black is preferably used as the self-dispersible pigment. An example of the self-dispersible carbon black is one obtained by subjecting carbon black to physical treatment or chemical treatment so that hydrophilic functional groups (hydrophilic groups) are bonded to the surface of the carbon black. Examples of the hydrophilic group include a sulfo group, a carboxyl group, and a phosphate group.

Further, in the present invention, anionic self-dispersible carbon black is preferably used because effects produced by α-glucan and a derivative thereof, which will be described later, are easily and sufficiently obtained and handwriting excellent in water resistance is easily achieved while dispersion stability is maintained. Further, self-dispersible carbon black in which carboxyl groups or sulfo groups, especially carboxyl groups are bonded to the surface of carbon black is more preferred.

As will be described later, the ink composition according to the present invention is easily prepared as a low-viscosity ink used for writing instruments using, as a nib, a fibrous tip, a felt tip, or a plastic tip or an ultralow-viscosity ink used for writing instruments having a pen core including a comb groove to temporarily store ink, an ink passageway, and an air passageway, and in this case, using the self-dispersible pigment is more effective. The self-dispersible pigment can improve dispersibility without using a pigment dispersant, and therefore ink viscosity can be kept lower, excellent ink dischargeability is achieved even from the beginning of writing, and uniform and excellent handwriting is easily left.

The self-dispersible pigment usable in the present invention is not particularly limited, and examples of a commercially-available product of the self-dispersible pigment include BONJET BLACK Series manufactured by ORIENT CHEMICAL INDUSTRIES CO., LTD., CAB-O-JET Series manufactured by Cabot Corporation, Aqua-Black Series manufactured by TOKAI CARBON CO., LTD., and Fuji-JET Black Series manufactured by Fuji Pigment Co., Ltd.

When self-dispersible carbon black is used as the self-dispersible pigment, the size of pigment particles contained in the self-dispersible carbon black is not particularly limited. In the case of carbon black, primary particles generally aggregate to form secondary particles, and in order to maintain dispersion stability, handwriting fastness, and ink dischargeability at high levels, the average particle diameter of the secondary particles is preferably 20 to 1,000 nm, more preferably 50 to 500 nm, even more preferably 100 to 200 nm,

The viscosity as a physical property of a self-dispersible carbon black dispersion is preferably 1.0 to 10.0 mPa·s, more preferably 2.0 to 10.0 mPa·s, even more preferably 5.0 to 10.0 mPa·s. When the viscosity of the self-dispersible carbon black dispersion is within the above range, the ink viscosity of the ink composition is easily adjusted to a desired value, ink dischargeability is excellent, and handwriting excellent in color developability is easily achieved.

The pH of the self-dispersible carbon black dispersion is preferably 5.0 to 9.0, more preferably 6.0 to 8.0, even more preferably 6.0 to 7.0. The surface tension of the self-dispersible carbon black dispersion is preferably 40 to 72 mN/m, more preferably 50 to 72 mN/m, even more preferably 60 to 72 mN/m. When the surface tension of the self-dispersible carbon black dispersion is within the above range, the surface tension of the ink composition is easily adjusted to a desired value, excellent handwriting with little bleeding is easily achieved, and further dripping from a nib can be prevented while the function of a pen core is sufficiently performed, excellent ink dischargeability is achieved, and excellent handwriting with little blurring is achieved.

The content of the self-dispersible pigment in the ink composition according to the present invention is preferably 0.1 to 30 mass%, more preferably 0.1 to 10% mass% based on the total mass of the ink composition.

### <a-glucan or α-glucan derivative>

The ink composition according to the present invention contains α-glucan or an α-glucan derivative (hereinafter sometimes simply referred to as an α-glucan).

The α-glucan has excellent water retaining capacity and further has a film-forming property. Therefore, the ink composition forms a coating film on a nib so that moisture evaporation is prevented, and therefore excellent dry-up resistance can be maintained. The formed coating film is easily broken by physical stress exerted during writing, and therefore the coating film is easily broken at the beginning of writing and does not disturb the formation of handwriting. Further, after the formation of handwriting, water resistance is imparted to the handwriting, which makes it possible to improve handwriting fastness. The reason for this is considered to be that a coating film is formed on the surface of the obtained handwriting, and therefore even when a water droplet is attached to the handwriting later, outflow of the self-dispersible pigment is prevented.

Alpha glucan is a polymer in which many glycose molecules are linked by α-bonds and which has a weight-average molecular weight of, for example, 5,000 or more, preferably 10,000 or more, and is distinguished into α-1,3 glucan, α-1,4 glucan, α-1,6 glucan, α-1,4-1,6 glucan, and the like depending on the mode of bonding. A specific example of α-1,3 glucan is mutan, a specific example of α-1,4 glucan is amylose, a specific example of α-1,6 glucan is dextran, and specific examples of α-1,4-1,6 glucan are glycogen, amylopectin, and pullulan. The α-glucan derivative is obtained by, for example, chemically modifying the α-glucan described above. Alpha-glucan includes also dextrin obtained by decomposing starch with an enzyme or the like and having a relatively low molecular weight.

The α-glucan used in the present invention is not particularly limited, but in the present invention, α-1,4-1,6 glucan or an α-1,4-1,6 glucan derivative is preferred. Further, α-glucan is preferably one having a weight-average molecular weight of 5,000 to 500,000 and is more preferably one having a weight-average molecular weight of 50,000 to 400,000. Here, in the present invention, the α-glucan is preferably one formed by synthesis from the viewpoint of quality stability of the ink composition. Low-molecular-weight dextrin obtained by decomposition of starch is also included in the α-glucan, but an α-glucan obtained by synthesis is preferably used. Pullulan and a pullulan derivative are particularly preferred because they are greatly effective at improving the properties described above.

Pullulan is a water-soluble polymeric polysaccharide represented by the following formula (I) and having, as a structural unit, maltotriose, in which 3 molecules of glucose are linked by α-1,4 bonds, to form a structure in which maltotriose is linked through α-1,6 bonds. Pullulan is a compound easily soluble in water, non-toxic to humans, free from irritating properties, and tasteless and odorless. The source and production method of pullulan are not particularly limited, and a method is usually suitably used in which a microorganism having the ability to produce pullulan is cultivated and a pullulan-containing material is collected from a culture. An example of such a microorganism is Aureobasidium pullulans. 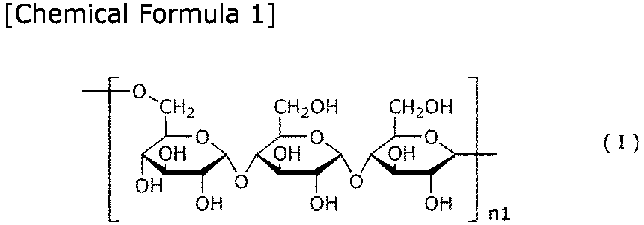 wherein n1 is an integer.

The pullulan derivative is not particularly limited as long as it is a pullulan-derived substance obtained by, for example, chemically modifying the pullulan described above. Examples of the pullulan derivative include dialdehyde pullulan, aminoalkylated pullulan, carboxylated pullulan, crosslinked pullulan, a sulfuric acid ester derivative of pullulan, and a pullulan-sterol derivative such as cholesterol pullulan.

As the pullulan derivative, a pullulan-sterol derivative is preferred, and particularly, a pullulan-cholesterol derivative that is a compound obtained by introducing cholesterol into pullulan by chemical bonding is more preferably used. The reason for this is considered to be that the pullulan-cholesterol derivative is easily adsorbed to a metal or a synthetic resin so that an excellent coating film is easily formed on a nib. Further, in consideration of easy availability and temporal stability of the compound, the pullulan-cholesterol derivative is preferably cholesteryl hexyl dicarbamate pullulan (cholesterol pullulan) that is a compound obtained by adding cholesterol to pullulan with hexamethylene diisocyanate. Examples of the cholesteryl hexyl dicarbamate pullulan include compounds represented by the following formula (II). 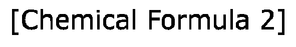 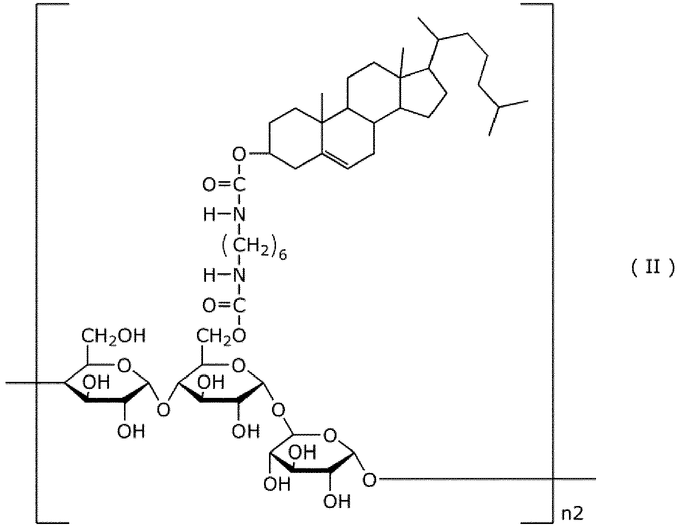 wherein n2 is an integer.

Therefore, in the present invention, pullulan or cholesteryl hexyl dicarbamate pullulan (cholesterol pullulan) is particularly suitably used because excellent dry-up resistance and handwriting water resistance are easily achieved. Among then, cholesteryl hexyl dicarbamate pullulan tends to achieve excellent handwriting fixability (scratch resistance) as well as excellent dry-up resistance and handwriting water resistance, and therefore in consideration of also improving handwriting fixability, cholesteryl hexyl dicarbamate pullulan is preferably used.

Examples of a commercially-available product of pullulan that can suitably be used include pharmaceutical-level pullulan (trade name "Japanese Pharmacopoeia Pullulan"), cosmetics-level pullulan (trade name "Pullulan for Cosmetics"), and food additive-level pullulan (trade name "Food Additive Pullulan") which are manufactured by HAYASHIBARA CO., LTD.

An example of a commercially-available product containing cholesterol pullulan is Meduseeds Series (manufactured by NOF CORPORATION), and specific examples thereof include Meduseeds-C1 and Meduseeds-CP. Meduseeds-CP contains cholesteryl hexyl dicarbamate pullulan, water, butylene glycol, methylparaben, and phenoxyethanol.

The content of the α-glucan in the ink composition according to the present invention is preferably 0.001 to 1 mass% based on the total mass of the ink composition. When the content is 0.001 mass% or more, water retention capacity and film-forming ability of α-glucan or the α-glucan derivative are sufficiently obtained so that excellent dry-up resistance, handwriting water resistance, and handwriting fixability are easily achieved, and when the content is 1 mass% or less, solubility in the ink composition is stabilized and excellent ink dischargeability from a nib is maintained so that excellent handwriting is easily left. Further, the content is more preferably 0.005 to 0.5 mass%, particularly preferably 0,.01 to 0.1 mass%.

It should be noted that the α-glucan may be used as a mixture obtained by combining two or more α-glucans.

The ink composition according to the present invention contains a self-dispersible pigment and an α-glucan, and the content ratio of the α-glucan to the self-dispersible pigment (a-glucan/self-dispersible pigment) based on mass is preferably 0.0001 to 0.1, more preferably 0.001 to 0.1. When the content ratio is within the above range, dispersion stability, handwriting water resistance, and dry-up resistance can be achieved in good balance.

### <Water>

The ink composition according to the present invention contains water. The water to be used is not particularly limited, and examples thereof include tap water, ion-exchange water, ultrafiltered water, and distilled water.

### <Another additive>

The ink composition according to the present invention may contain any additive if necessary. Additives that can be used will be described below.

### <Surfactant>

The ink composition according to the present invention may further contain a surfactant. Examples of such a surfactant include a nonionic surfactant, an anionic surfactant, a cationic surfactant, a surfactant having an acetylene bond in its structure, a silicone-based surfactant, a phosphoric acid ester-based surfactant, and a fluorine-based surfactant. These surfactants have the effect of adjusting the surface tension of the ink composition to fall within an appropriate range and the effect of appropriately maintaining wettability on the inner surface of an ink storage body or a pen core. Therefore, ink invertibility in the ink storage body and dripping resistance can be improved, and further smooth ink discharge is easily achieved so that excellent handwriting with little blurring or the like can be achieved.

As such a surfactant, a nonionic surfactant is preferably used. This is because the effect of the surfactant can sufficiently be obtained without blocking of the effects obtained by the self-dispersible pigment and α-glucan by the nonionic surfactant. Among nonionic surfactants, one having a polyoxyalkylene structure, such as polyether amine or polyoxyalkylene glycol, is particularly effective in the present invention because the effects described above can easily be obtained. Among surfactants having a polyoxyalkylene structure, one having a polyoxyethylene structure is preferred. This is because dissolution stability in water is excellent and therefore the effects are more easily obtained.

Polyether amine or polyoxyalkylene glycol makes it possible to appropriately maintain wettability on the inner side surface of an ink storage body while maintaining dispersion stability of the self-dispersible pigment.

Therefore, when the nib of a writing instrument facing laterally or upwardly is faced downward for writing, the water-based ink composition can smoothly fall toward the nib without remaining at its original position in the ink storage body. That is, they have the effect of improving ink invertibility in the ink storage body.

Further, polyether amine or polyoxyalkylene glycol makes it possible to appropriately maintain not only wettability of the ink composition on the inner side surface of the ink storage body but also wettability on an ink flow rate adjusting body such as a pen core. As a result, the function of the ink flow rate adjusting body is easily and sufficiently achieved so that excess ink can smoothly be flowed into the ink flow rate adjusting body, and therefore it is possible to prevent a phenomenon in which ink drips from the nib due to a temperature change or a change in the pressure in the writing instrument by attaching or detaching of a cap.

The HLB value of polyether amine that can be used in the present invention is preferably 10 to 20. This is because when the HLB value of polyether amine is 10 or more, polyether amine is completely dissolved in water so that an aggregate is less likely to be formed with the self-dispersible pigment, especially self-dispersible carbon black, and therefore dispersion stability in the ink composition is not affected.

Further, the average number of moles of ethylene oxide added (EO number) of the polyether amine is preferably 10 to 35, more preferably 13 to 30. When the EO number of the polyether amine is within the above range, solubility in water is high, and therefore the effects of polyether amine can stably be obtained.

Examples of the polyether amine include polyoxyethylene stearylamine, polyoxyethylene(20) alkyl(C₁₄-C₁₈)amine, polyoxyethylene beef tallow alkylamine, polyoxyethylene alkylamine ether, polyoxyethylene laurylamine, and polyoxyethylene alkyl(palm)amine.

As the polyoxyalkylene glycol, polyoxyethylene polyoxypropylene glycol is preferably used.

The average molecular weight of polyoxyethylene polyoxypropylene glycol is preferably 100 to 20,000, more preferably 1,000 to 15,000. Further, in consideration of excellent dissolution stability and sufficiently obtaining the effects of polyoxyethylene polyoxypropylene glycol, the average molecular weight is even more preferably 3,000 to 15,000, particularly preferably 10,000 to 15,000.

The EO number of polyoxyethylene polyoxypropylene glycol is preferably 5 to 500, more preferably 100 to 400, preferably 200 to 300.

The average number of moles of propylene oxide added (PO number) of polyoxyethylene polyoxypropylene glycol is preferably 5 to 300, more preferably 10 to 200, even more preferably 20 to 100, particularly preferably 40 to 100.

The ethylene oxide content of polyoxyethylene polyoxypropylene glycol is preferably 20 to 90 mass%, more preferably 30 to 80 mass%, even more preferably 60 to 80 mass%.

The content of the surfactant in the water-based ink composition is preferably 0.001 to 1.0 mass%, more preferably 0.01 to 0.5 mass%, even more preferably 0.01 to 0.1 mass% based on the total mass of the water-based ink composition.

### <Water-soluble organic solvent>

In the present invention, a water-soluble organic solvent is preferably further contained. As the water-soluble organic solvent, one used for conventional water-based ink compositions for writing instruments can be used.

Examples of such a water-based organic solvent include: (i) a glycol such as ethylene glycol, butylene glycol, diethylene glycol, triethylene glycol, or glycerin; (ii) an alcohol such as methanol, ethanol, 1-propanol, 2-propanol, isopropanol, isobutanol, t-butanol, propargyl alcohol, allyl alcohol, 3-methyl-1-butin-3-ol, ethylene glycol monomethyl ether acetate, or another higher alcohol; and (iii) a glycol ether such as ethylene glycol monomethyl ether, ethylene glycol monoethyl ether, 3-methoxybutanol, or 3-methoxy-3-methyl butanol. A mixture obtained by combining two or more of them may be used.

When the water-soluble organic solvent is used for the ink composition according to the present invention, a polyhydric alcohol solvent is preferably used. This is because the moisture absorption effect of the polyhydric alcohol solvent can be imparted to the ink composition so that dry-up resistance tends to be improved. The reason for this is considered to be that the synergistic effect of evaporation prevention by formation of coating film of the α-glucan and evaporation prevention due to the moisture absorption effect of the polyhydric alcohol solvent makes it possible to effectively prevent evaporation of moisture in ink from a nib. Therefore, even when the nib is exposed to the air for a long time in an environment of particularly strong dry conditions, the ink is smoothly discharged from the beginning of writing and uniform handwriting with little blurring can be left. Particularly, the polyhydric alcohol solvent can suitably be used for writing instruments to be placed in an environment where nibs are easily dried, such as retractable writing instruments that will be described later.

Among the polyhydric alcohol solvents, ethylene glycol, diethylene glycol, butylene glycol, or glycerin is preferred, ethylene glycol, diethylene glycol, or glycerin is more preferred, and ethylene glycol or diethylene glycol is particularly preferred. These polyhydric alcohols are highly effective at improving dry-up resistance.

When the water-soluble organic solvent is used, the content thereof is preferably 0.1 to 40 mass% based on the total mass of the ink composition. In consideration of improving dry-up resistance, handwriting water resistance, and handwriting fixability in good balance, the content is preferably 0.5 to 40 mass%, more preferably 0.5 to 10 mass%, even more preferably 1 to 5 mass%.

### <Another colorant>

The ink composition according to the present invention contains, as a colorant, a self-dispersible pigment, but may contain another colorant for, for example, color adjustment if necessary. As the colorant, one selected from conventionally-known dyes and pigments can be used without impairing the effects of the present invention. However, dyes generally tend to degrade handwriting fastness, and therefore it is preferred that no dye is contained. As a pigment, one containing a pigment dispersant may be used, but the amount of such a pigment added is preferably small to more strongly produce the effects of the present invention.

### <pH adjusting agent>

The ink composition according to the present invention may contain a pH adjusting agent. Examples of the pH adjusting agent include: a basic inorganic compound such as ammonia, sodium carbonate, sodium phosphate, or sodium hydroxide; a basic organic compound such as sodium acetate, triethanolamine, or diethanolamine; lactic acid; and citric acid, and in consideration of temporal stability of the ink composition, a basic organic compound is preferably used, and in more consideration of temporal stability of the ink composition, weakly basic triethanolamine is preferably used. A mixture obtained by combining two or more of these pH adjusting agents may be used.

The pH of the ink composition is preferably 11 or less. This is because when the pH is 11 or less, the α-glucan is less likely to be decomposed and therefore high temporal stability is easily achieved. From the viewpoint of the temporal stability of the ink composition and corrosion prevention of a metallic member to be in contact with the ink composition, the pH is preferably 6 or more. That is, the pH of the ink composition is more preferably 6 to 11, even more preferably 7 to 10. It should be noted that in the present invention, the pH is a value measured at 20°C using an HM-30R pH meter.

### <Antibacterial substance>

The ink composition according to the present invention may contain an antibacterial substance. Examples of the antibacterial substance include phenol, phenoxyethanol, sodium benzoate, sodium dehydroacetate, potassium sorbate, propyl paraoxybenzoate, 2,3,5,6-tetrachloro-4-(methylsulfonyl)pyridine, sodium 2-pyridinethiol-1-oxide, 1,2-benzisothiazolin-3-one, 2-methyl-4-isothiazolin-3-one, 2-n-octyl-4-isothiazolin-3-one, orthophenylphenol, and salts thereof, and the antibacterial substance is more preferably selected from the group consisting of phenoxyethanol, 1,2-benzisothiazolin-3-one (hereinafter sometimes referred to as BIT), 2-methyl-4-isothiazolin-3-one (hereinafter sometimes referred to as MIT), 2-n-octyl-4-isothiazolin-3-one (hereinafter sometimes referred to as OIT), and a mixture of two or more of them.

Among them, phenoxyethanol is preferred because its safety is high and the effect of improving dispersion stability tends to be enhanced by using in combination with the self-dispersible pigment.

Further, when phenoxyethanol is used, ink dischargeability can be improved because ink viscosity is easily adjusted to be low while dispersion stability is maintained. As a result, uniform handwriting excellent in color is easily left.

The content of phenoxyethanol is preferably 1,000 to 100,000 ppm, more preferably 3,000 to 30,000 ppm, even more preferably 3,000 to 10,000 ppm based on the total mass of the ink composition.

Further, when phenoxyethanol is used in combination with an antibacterial substance having an isothiazoline structure, such as BIT, MIT, or OIT, a more excellent antibacterial effect can be obtained while excellent dispersion stability is maintained. When such a combination is used, the blending ratio by mass of phenoxyethanol and the antibacterial substance having an isothiazoline structure is preferably 1:10 to 1:0.001, more preferably 1:1 to 1:0.001, even more preferably 1:0.5 to 1:0.005, particularly preferably 1:0.3 to 1:0.005, most preferably 1:0.2 to 1:0.005.

Further, when phenoxyethanol is used, the amount of phenoxyethanol to be added, which is represented by a mass ratio based on the mass of the self-dispersible pigment, is preferably 1:1 to 1:0.01, more preferably 1:1 to 1:0.05, most preferably 1:0.5 to 1:0.1. When the mass ratio is within such a range, the ink composition achieves antibacterial performance, and in addition to this, dispersion stability of the self-dispersible pigment, especially self-dispersible carbon black is improved. As a result, writing performance such as bleeding and bleed-through of handwriting is improved.

It should be noted that when a conventional antibacterial substance is added to the ink composition in an amount such that sufficient antibacterial performance can be achieved, there is a fear that ink invertibility is impaired. On the other hand, phenoxyethanol does not impair the ink invertibility of the ink composition in an ink storage body. Therefore, phenoxyethanol is preferred also from the viewpoint of achieving both antibacterial performance and ink invertibility.

Further, when phenoxyethanol is used, the content ratio of phenoxyethanol to the α-glucan (phenoxyethanol/a-glucan) by mass is preferably 5 to 80, more preferably 5 to 60. When the content ratio is within the above range, solubility of α-glucan is well maintained while the effects of phenoxyethanol are obtained, and therefore the effects obtained by α-glucan can sufficiently be obtained and excellent water resistance can be achieved.

### <Antirust agent>

The ink composition according to the present invention may contain an antirust agent. Examples of the antirust agent include benzotriazole and derivatives thereof, tolyltriazole, dicyclohexylammonium nitrite, diisopropylammonium nitrite, sodium thiosulfate, saponin, and dialkyl thiourea.

### <Chelating agent>

The ink composition according to the present invention may contain a chelating agent. Examples of the chelating agent include ethylenediaminetetraacetate (EDTA), hydroxyethylenediaminetriacetate (HEDTA), glycoletherdiaminetetraacetate (GEDTA), nitrilotriacetate (NTA), hydroxyethyliminodiacetate (HIDA), dihydroxyethyl glycine (DHEG), diethylenetriaminepentaacetate (DTPA), triethylenetetraminehexaacetate (TTHA), and alkali metal salts, ammonium salts, or amine salts thereof.

### <Moisturizing agent>

The ink composition according to the present invention may contain a moisturizing agent. The α-glucan or the polyhydric alcohol solvent used in the present invention also has moisturizing effect, but the moisturizing agent described here refers to one other than these. Examples of the moisturizing agent include urea, sorbit, N,N,N-trialkyl amino acid, and hyaluronic acid, and they can suitably be used.

N,N,N-trialkyl amino acid has high moisture absorption performance, and therefore when N,N,N-trialkyl amino acid is used in combination with the α-glucan, more excellent dry-up resistance can be achieved. Further, excellent handwriting water resistance achieved by α-glucan can be maintained, and handwriting fastness is not impaired. Further, the ink composition is easily prepared as a low-viscosity ink composition or an ultra low-viscosity ink composition which will be described later while excellent dry-up resistance is maintained, and further, handwriting fixability is easily improved. Therefore, the ink composition according to the present invention preferably further contains N,N,N-trialkyl amino acid. N,N,N-trialkyl amino acid is represented by, for example, the following formula (III):

R^{a}₃N⁺(CH₂)ₙₐCOO⁻ (III),

wherein R^{a} is independently a linear or branched alkyl group selected from, for example, the group consisting of a methyl group, an ethyl group, a propyl group, an isopropyl group, a butyl group, an isobutyl group, a sec-butyl group, and a tert-butyl group.

More specific examples of N,N,N-trialkyl amino acid include trimethylglycine, triethylglycine, tripropylglycine, or triisopropylglycine wherein na =1, trimethyl-β-alanine wherein na = 2, and trimethyl-γ-aminobutyric acid wherein na = 3. Among them, trimethylglycine is particularly preferred from the viewpoint of dry-up resistance and storage stability.

The content of the moisturizing agent, e.g., N,N,N-trialkyl amino acid is more preferably 0.01 to 10%, more preferably 0.1 to 10%, even more preferably 1 to 5% based on the total mass of the ink composition.

### <Water-soluble resin and water-insoluble resin>

The ink composition according to the present invention may contain a water-soluble resin or a water-insoluble resin. Here, the water-soluble resin is contained in the ink composition in a dissolved state, and the water-insoluble resin is contained in the ink composition in the state of solid particles or liquid droplets. Examples of such a water-soluble resin or a water-insoluble resin include an acrylic resin, a urethane resin, a styrene-butadiene-based resin, a polyester-based resin, and a vinyl acetate-based resin.

### <Antifoaming agent>

The ink composition according to the present invention may further contain an antifoaming agent such as dimethylpolysiloxane.

### <Lubricant>

The ink composition according to the present invention may further contain a lubricant such as a fatty acid. It should be noted that a phosphoric acid ester-based surfactant may also function as a lubricant and therefore may be used.

### <Shear thinning-property imparting agent>

The ink composition according to the present invention may contain a shear thinning-property imparting agent. The shear thinning-property imparting agent may improve practicality by imparting appropriate viscosity to the ink composition. In the present invention, the shear thinning-property imparting agent to be used may appropriately be selected from among conventionally-known ones. Specific examples thereof include a polysaccharide such as xanthane gum, succinoglycan, or carrageenan and a polymer such as polyacrylic acid or a crosslinked polyacrylic acid. Alternatively, a synthetic polymeric nonionic surfactant such as an associative urethane or an anionic surfactant may be used as the shear thinning-property imparting agent. A mixture obtained by combining two or more of these shear thinning-property imparting agents may be used.

### <Physical properties of ink composition for writing instruments>

It is preferred that the ink composition according to the present invention has a relatively low viscosity. The ink composition according to the present invention contains various additives and also contains an α-glucan or a water-soluble organic solvent generally considered to have thickening effect, but by appropriately adjusting the content thereof, the ink composition can be prepared as a low-viscosity ink composition having a viscosity of 50 mPa·s or less at a shear rate of 380 sec⁻¹ or an ultralow-viscosity ink composition having a viscosity of 2 mPa·s or less at a shear rate of 380 sec⁻¹. When such an ink composition having a low viscosity is used for such a writing instrument having a pen core including a comb groove to temporarily store ink, an ink passageway, and an air passageway as will be described later, the function of the pen core can sufficiently be performed and excellent ink dischargeability can be achieved. Therefore, the ink composition according to the present invention can suitably be used for a writing instrument having such a pen core as described above. Further, the ink composition according to the present invention can be prepared as an ultralow-viscosity ink while dispersion stability of the ink is maintained and therefore can particularly suitably be used for a fountain pen having such a pen core as described above.

The surface tension of the ink composition according to the present invention in an environment at 20°C is preferably 35 to 60 mN/m, more preferably 40 to 55 mN/m. When having such a surface tension, the ink composition has appropriate drag against external force such as gravity, atmospheric pressure, or kinetic energy caused by impact and appropriate wettability on an ink flow rate adjusting member such as a pen core, which makes it possible to effectively prevent ink dripping from a nib. The surface tension of the ink composition can appropriately be adjusted by, for example, adjusting the content of the surfactant.

### <<Method for producing ink compositions>>

The ink composition according to the present invention can be produced by any conventionally-known method. Specifically, the ink composition can be produced by blending necessary amounts of the above-described components and mixing them with any type of stirrer such as a magnetic stirrer, a propeller stirrer, a homogenizer stirrer, a Homodisper, a Homomixer, or a planetary stirrer or any type of disperser such as a Bead Mill.

### <<Writing instrument>>

The structure and shape of a writing instrument per se into which the water-based ink composition for writing instruments according to the present invention is to be charged are not particularly limited, and the water-based ink composition according to the present invention can be used for various conventional widely-used writing instruments such as a marking pen (marker) having, as a nib, a fibrous tip, a felt tip, or a plastic tip, a ballpoint pen having a ballpoint pen tip as a nib, and a fountain pen using a metallic nib.

Examples of the material of nib of the writing instrument such as a ballpoint pen or a fountain pen include a metal such as cemented carbide, stainless steel, gold, or iridium and a ceramic such as silicon carbide, and examples of the material of nib of the writing instrument such as a marking pen (marker) include synthetic resins such as polyester, nylon, polyurethane, polyethylene, polypropylene, and an acrylic resin.

The ink composition according to the present invention tends to adsorb to a metal such as gold-plated stainless steel, 14-carat gold, 18-carat gold, or 22-carat gold. Therefore, when an ink discharging part of the writing instrument is made of a metal, a coating film is easily formed on the surface thereof and is likely to be maintained with time. Therefore, the ink composition according to the present invention can suitably be used for writing instruments having a nib made of a metal so that excellent dry-up resistance is achieved.

The nibs of fountain pens are more likely to be exposed to outside air as compared to those of other writing instruments so that ink compositions are easily dried at nibs and therefore preferably have particularly high dry-up resistance. The ink composition according to the present invention has sufficient dry-up resistance and is therefore particularly suitably used for fountain pens.

The writing instrument that can use the ink composition according to the present invention may be one having a structure such that the ink composition is directly charged or one having an ink storage body into which the ink composition can be charged. Alternatively, the writing instrument that can use the ink composition according to the present invention may be a cartridge- or converter-type writing instrument having a structure such that the ink storage body can be exchanged by detachably attaching it to the main body or nib of the writing instrument. An example of the converter-type writing instrument is a writing instrument that can be equipped with an ink storage body (ink aspirator) having the function of directly aspirating ink thereinto from an ink container such as an ink bottle.

It should be noted that in the case of a cartridge ink for writing instruments containing the ink composition according to the present invention, the ink composition is stored in a hermetically-sealed state, and therefore a concentration change due to moisture evaporation is small and temporal storage stability is also excellent due to little influence of outside air. Further, the cartridge ink for writing instruments generally has a shape optimal for each writing instrument, and therefore contact with outside air is minimized and liquid leakage from a connecting portion is less likely to occur. Therefore, the ink composition according to the present invention is preferably supplied or distributed in a state where it is contained in a hermetically-sealed cartridge ink for writing instruments.

The writing instrument that can use the ink composition according to the present invention may be a cap-type writing instrument having a cap to cover a nib or a retractable writing instrument having a knock mechanism, a rotation mechanism, or a slide mechanism and a shaft in which a nib can be retracted. The ink composition according to the present invention has sufficient dry-up resistance and therefore can suitably be used for retractable writing instruments to be often placed in an environment where their nibs are easily dried.

An ink supply mechanism of the writing instrument that can use the ink composition according to the present invention is not particularly limited, either, and examples thereof include a mechanism (mechanism 1) having an ink guiding core formed from a fiber bundle or the like as an ink flow rate adjusting member to guide the water-based ink composition to a nib, a mechanism (mechanism 2) in which the ink composition is guided to a nib through a pen core including a comb groove to temporarily store ink, an ink passageway, and an air passageway, a mechanism (mechanism 3) having an ink flow rate adjusting member based on a valve system to supply the water-based ink composition to a nib, and a mechanism (mechanism 4) having an ink container or shaft equipped with a nib to directly supply the water-based ink composition to the nib.

As described above, the ink composition according to the present invention can be prepared as a low-viscosity ink composition or an ultralow-viscosity ink composition while dispersion stability of the ink composition is sufficiently maintained and therefore can suitably be used for writing instruments having a supply mechanism such as the (mechanism 1), the (mechanism 2), or the (mechanism 3).

Further, as described above, the ink composition according to the present invention can appropriately maintain wettability on the pen core of the (mechanism 2), and therefore ink dischargeability from the nib is improved and clear handwriting with little blurring can easily be formed, and even when the pressure in an ink storage body is changed due to a change in outside temperature or detaching or attaching of a cap, ink is held in the comb groove so that ink leakage from the nib can be prevented and therefore excellent dripping resistance can be achieved. Therefore, the ink composition according to the present invention can particularly suitably be used for writing instruments having the (mechanism 2), that is, for writing instruments having a pen core including a comb groove to temporarily store ink, an ink passageway, and an air passageway.

In the case of a writing instrument using an ink composition (pigment ink) using a pigment as a colorant as in the case of the present invention, when dried, ink may be stuck to a writing instrument member, such as a nib or an ink storage body (a cartridge or a converter), of the writing instrument by a resin component in the ink. In such a case, a cleaning liquid for writing instruments is preferably used to clean the nib to which the ink is stuck. The reason for this is that influence on writability can be reduced by sufficiently removing stuck ink using the cleaning liquid for writing instruments, and when ink different in color is used for the writing instrument after cleaning, mixing of colors can be prevented.

As the cleaning liquid for writing instruments, a cleaning liquid for writing instruments containing a nonionic surfactant is preferably used in consideration of solubility in water. Specifically, the HLB value of the surfactant is preferably 4 to 15, more preferably 6 to 15. Further, in consideration of cleaning performance, a cleaning liquid for writing instruments containing a nonionic surfactant having a polyoxyalkylene group is preferably used.

Particularly, using such a cleaning liquid for writing instruments makes it possible to effectively remove stuck ink also in the case of a writing instrument including a member having a complicated shape, such as a pen core including a comb groove to temporarily store ink, an ink passageway, and an air passageway.

The cleaning liquid for writing instruments is preferably contained in a packaging material, such as a film or a sheet, to be prepared as a packaged cleaning liquid for writing instruments, but from the viewpoint of portability or convenience, a one-time use amount of the cleaning liquid for writing instruments is preferably individually packaged by a packaging material such as a film or a sheet and is more preferably packaged by a film made of a metallic material in consideration of improving long-term storage stability such as moisture evaporation. Further, the packaged cleaning liquid for writing instruments and the ink composition according to the present invention, a writing instrument containing the ink composition, or a cartridge ink for writing instruments containing the ink composition are preferably sold together as a writing instrument set. Specifically, the packaged cleaning solution for writing instruments is preferably sold together with the ink composition contained in an ink bottle and a writing instrument such as a fountain pen, a ballpoint pen, or a marking pen (marker) as a writing instrument set, and is more preferably sold together with an aspirator such as a syringe for collecting the cleaning liquid for writing instruments and a writing instrument as a writing instrument set.

### Examples

Hereinbelow, the present invention will be described in more detail with reference to Examples, but the present invention is not limited to these Examples.

### <Example 1>

The following raw materials were mixed by propeller stirring to obtain an ink composition of Example 1.
Ethylene glycol: 2.00 mass%
Triethanolamine: 2.00 mass%
Betaine (N,N,N-trimethylglycine): 2.00 mass
Pullulan: 0.03 mass%
Aqua-Black 162 (trade name, manufactured by TOKAI CARBON CO., LTD., anionic self-dispersible carbon black dispersion, surface functional group of carbon black: carboxyl group, secondary particle diameter (average) determined from particle size distribution of carbon black: 110 nm, viscosity: 6.5 mPa·s, pH 6.5, surface tension: 72 mN/m, concentration 20 mass%): 15.00 mass%
Phenoxyethanol: 0.50 mass%
1,2-benzisothiazolin-3-one (BIT): 0.05%
Water: rest

### <Examples 2 to 4, Comparative Examples 1 to 4>

Ink compositions of Examples 2 to 4 and Comparative Examples 1 to 4 were obtained by changing the types of raw materials and the amounts of the raw materials blended. The raw materials used are as follows.
Meduseeds-CP (trade name, manufactured by NOF CORPORATION, containing cholesteryl hexyl dicarbamate pullulan, water, butylene glycol, methylparaben, and phenoxy ethanol, cholesteryl hexyl dicarbamate pullulan concentration 1 mass%)
Sandec #70FN (trade name, manufactured by Sanwa Starch Co., Ltd., dextrin)
BONJET BLACK CW-1 (trade name, manufactured by ORIENT CHEMICAL INDUSTRIES CO., LTD., self-dispersible carbon black dispersion, concentration 20 mass%)
FUJI SP Black 8112 (trade name, manufactured by Fuji Pigment Co., Ltd., acrylic resin dispersion-type carbon black dispersion, concentration 15%)

The compositions of the prepared ink compositions are shown in Table 1.

### <Experiments and evaluations>

The obtained ink compositions were evaluated by the following methods. The obtained results are shown in Table 1.

### <Viscosity>

The viscosity of each of the obtained ink compositions was measured by a B-type rotational viscometer (Model: BLII, rotor: BL adaptor, manufactured by Toki Sangyo Co., Ltd., sample amount 20 mL, 20°C, rotation speed 60 rpm).

### <Surface tension>

The surface tension of each of the obtained ink compositions was measured by a surface tensiometer (Model: DY-200, manufactured by Kyowa Interface Science Co., Ltd., 20°C, platinum plate, vertical plate method).

### <pH>

Measurement was performed using a pH meter (Model: HM-30R, manufactured by DDK-TOA CORPORATION, 20°C).

### <Dry-up resistance>

A cartridge ink filled with each of the ink compositions was inserted into a knock-type capless fountain pen (FCN-1MR, manufactured by PILOT CORPORATION) having an M size nib made of gold-plated stainless steel and a pen core including a comb groove to temporarily store ink, an ink passageway, and an air passageway to prepare a fountain pen. This fountain pen was left to stand with its nib being exposed to an environment at 20°C and 65%RH for 30 minutes, and then a character "V" was repeatedly written on test paper to count the number of characters that could not be written.
A: 0 characters (immediately writable)
B: 2 to 4 characters
C: 5 or more characters or unwritable

### <Handwriting water resistance>

A cartridge ink filled with each of the ink compositions was inserted into a Custom 74 fountain pen (FKKN-12SR, manufactured by PILOT CORPORATION) having an M size nib made of 14-carat gold and a pen core including a comb groove that temporarily stores ink, an ink passageway, and an air passageway to prepare a fountain pen. This fountain pen was used to write characters on test paper, the test paper was left to stand in an environment at 25°C for 30 minutes, and then water was dropped onto the characters to observe bleeding of the characters.
A: Bleeding is hardly observed.
B: Bleeding is slightly observed, but there is no problem for practical use.
C: Bleeding is observed.

### <Handwriting density>

A cartridge ink filled with each of the ink compositions was inserted into a Custom 74 fountain pen (FKKN-12SR, manufactured by PILOT CORPORATION) having an M size nib made of 14-carat gold and a pen core including a comb groove to temporarily store ink, an ink passageway, and an air passageway to prepare a fountain pen. This fountain pen was used to write characters on test paper, and the density of the characters was evaluated.
A: Color optical density is sufficient.
B: Color optical density is slightly low, but there is no problem for practical use.
C: Color optical density is low and therefore concerns about practical use remain.

### [Table 1]

**Table 1**

| Component | | Example 1 | Example 2 | Comparative Example 1 | Comparative Example 2 | Comparative Example 3 | Example 3 | Example 4 | Comparative Example 4 |
|---|---|---|---|---|---|---|---|---|---|
| carbon black | self-dispersion-type ^{∗1} | 15.00 | 15.00 | 15.00 | | | | | |
| | self-dispersion-type ^{∗2} | | | | | | 20.00 | 20.00 | 20.00 |
| | acrylic resin dispersion-type ^{∗3} | | | | 20.00 | 20.00 | | | |
| α-glucans | pullulan | 0.03 | | | 0.03 | | 0.01 | | |
| | cholesterol pullulan ^{∗4} | | | | | | | 0.01 | |
| | dextrin ^{∗5} | | 0.03 | | | | | | |
| water-soluble organic solvent | ethylene glycol | 2.00 | 2.00 | 2.00 | 2.00 | 2.00 | 2.00 | 2.00 | 2.00 |
| pH adjusting agent | triethanolamine | 2.00 | 2.00 | 2.00 | 2.00 | 2.00 | 2.00 | 2.00 | 2.00 |
| moisturizing agent | N,N,N-trimethylglycine | 2.00 | 2.00 | 2.00 | 2.00 | 2.00 | 2.00 | 2.00 | 2.00 |
| antibacterial substance | BIT | 0.05 | 0.05 | 0.05 | 0.05 | 0.05 | 0.05 | 0.05 | 0.05 |
| | phenoxyethanol | 0.50 | 0.50 | 0.50 | 0.50 | 0.50 | 0.50 | 0.50 | 0.50 |
| water and other aditives ^{∗}6 | | residue | residue | residue | residue | residue | residue | residue | residue |
| evaluation | dry-up resistance | A | A | A | A | A | A | A | A |
| | handwriting water resistance | A | B | C | A | A | B | B | C |
| | handwriting density | A | A | A | C | C | B | B | B |
| | viscosity (mPa·s) | 1.46 | 1.40 | 1.44 | 1.67 | 1.65 | 1.80 | 1.78 | 1.85 |
| | surface tension (mN/m) | 51.0 | 50.8 | 51.8 | 49.8 | 49.4 | 51.4 | 51.2 | 51.5 |
| | pH | 9.17 | 9.16 | 9.15 | 8.59 | 8.57 | 9.59 | 9.63 | 9.62 |

| | | | | | | | | | |
|---|---|---|---|---|---|---|---|---|---|
| ^{∗}1:Aqua-Black 162 ^{∗}2:BONJET BLACK CW-1 ^{∗}3:FUJI SP Black 8112 ^{∗}4: Cholesteryl hexyl dicarbamate pullulan ^{∗}5: Sandec#70FN ^{∗}6: Water and water-soluble organic solvents derived from additives etc. | | | | | | | | | |

### <Comparative Example 5>

As Comparative Example 5, an ink composition using carbon black not subjected to surface treatment and containing no dispersant was prepared but could not be evaluated because wettability of the pigment was low and dispersion stability was not sufficient. On the other hand, each of the ink compositions of Examples 1 to 4 and Comparative Examples 1 to 4 had sufficient dispersion stability.

### <Example 5>

An ink composition of Example 5 was prepared in the same manner as in Example 1 except that phenoxyethanol was not added. Each of the ink compositions of Example 1 and Example 5 was enclosed in a glass bottle, stored in an environment at 50°C for 12 weeks, then sampled near the liquid surface and at the bottom of the bottle, and observed with a microscope to evaluate the dispersion state of the pigment, and as a result, the pigment was more uniformly dispersed in Example 1 than in Example 5, that is, Example 1 was superior in dispersion stability to Example 5. Both of Example 1 and Example 5 had sufficient antibacterial performance.

### <Examples 1a, 6, and 7>

An ink composition having the same composition as Example 1 was prepared (Example 1a). Further, ink compositions of Example 6 and Example 7 were prepared in the same manner as in Example 1 except that the content of phenoxyethanol was changed. These compositions were evaluated in the same manner as in Example 1. The obtained results are shown in Table 2.

### [Table 2]

**Table 2**

| Component | | Example 1a | Example 6 | Example 7 |
|---|---|---|---|---|
| carbon black | self-dispersion-type ^{∗1} | 15.00 | 15.00 | 15.00 |
| | self-dispersion-type ^{∗2} | | | |
| | acrylic resin dispersion-type ^{∗3} | | | |
| α-glucans | pullulan | 0.03 | 0.03 | 0.03 |
| | cholesterol pullulan ^{∗4} | | | |
| | dextrin ^{∗5} | | | |
| water-soluble organic solvent | ethylene glycol | 2.00 | 2.00 | 2.00 |
| g | triethanolamine | 2.00 | 2.00 | 2.00 |
| moisturizing agent | N,N,N-trimethylglycine | 2.00 | 2.00 | 2.00 |
| antibacterial substance | BIT | 0.05 | 0.06 | 0.02 |
| | phenoxyethanol | 0.50 | 0.25 | 0.95 |
| water and other aditives ^{∗}6 | | residue | residue | residue |
| evaluation | dry-up resistance | A | A | A |
| | handwriting water resistance | A | A | A |
| | handwriting density | A | A | A |
| | viscosity (mPa·s) | 1.5 | 1.5 | 1.6 |
| | surface tension (mN/m) | 51.0 | 55.0 | 45.9 |
| | pH | 9.2 | 9.2 | 9.2 |

Further, the dispersion state and antibacterial performance of Examples 1a, 6, and 7 were evaluated in the same manner as in Example 1 and Example 5. The pigment was more uniformly dispersed in Example 1a, Example 6, and Example 7 than in Example 5, that is, Example 1a, Example 6, and Example 7 were superior in dispersion stability to Example 5, and further, Example 1a and Example 7 were superior in dispersion stability to Example 6. All of Example 1a, Example 5, Example 6, and Example 7 had sufficient antibacterial performance.

### <Example 8, Example 9>

An ink composition of Example 8 was prepared by further adding 0.1 mass% of polyether amine to the ink composition of Example 1. An ink composition of Example 9 was prepared by further adding 0.05 mass% of polyoxyethylene polyoxypropylene glycol to the ink composition of Example 1.

It should be noted that the physical properties of polyether amine used in Example 8 are as follows.

Polyether amine: polyoxyethylene-alkylamine, HLB value 15.4, EO number 20

The physical properties of polyoxyethylene polyoxypropylene glycol used in Example 9 are as follows.

Polyoxyethylene polyoxypropylene glycol: average molecular weight 13,000, number of moles of ethylene oxide added 240, number of moles of propylene oxide added 60, EO content 75 mass%)

Each of the ink compositions of Example 1, Example 8, and Example 9 was charged into an ink aspirator made of a resin (an ink aspirator having a resin object movable in a front-back direction) with its opening facing upward so that the movable object was completely immersed in the ink composition, and this ink aspirator was inserted into a writing instrument having a fountain pen-type nib and a pen core including a comb groove to temporarily store ink, an ink passageway, and an air passageway (manufactured by PILOT CORPORATION, fountain pen, FKA-1SR-NCM) with the nib facing upward. The 10 writing instruments were prepared as writing instruments for testing and the writing instruments for testing whose nibs faced upward were gently inverted so that the nibs faced downward, and as a result, when the ink composition of Example 8 or Example 9 was used, the number of the writing instruments for testing in which the ink composition flowed down in the ink storage body toward the nib within 10 seconds was larger, that is, ink invertibility in the ink storage body was more excellent than when the ink composition of Example 1 was used.

Further, a cartridge filled with each of the ink compositions of Example 1, Example 8, and Example 9 was inserted into a knock-type capless fountain pen (manufactured by PILOT CORPORATION) having an M size nib made of gold-plated stainless steel and a pen core including a comb groove to temporarily store ink, an ink passageway, and an air passageway to prepare a fountain pen. This fountain pen was used as a writing instrument for testing, left to stand in a vacuum desiccator, and in such a state, the pressure in the desiccator was reduced to -70 mmHg as a relative pressure with respect to the atmospheric pressure in 5 minutes. Then, the writing instrument for testing was further left to stand for 5 minutes in the desiccator while such a vacuum state of -70 mmHg as a relative pressure with respect to the atmospheric pressure was maintained, and as a result, when the ink composition of Example 8 or Example 9 was used, dripping from the nib was less likely to occur, that is, dripping resistance was more excellent than when the ink composition of Example 1 was used.

Further, the dry-up resistance, handwriting water resistance, and handwriting density of the ink compositions of Examples 8 and 9 were evaluated by the methods described above, and as a result, the evaluation results were the same as those of the ink composition of Example 1.

It is apparent from the above results that the ink compositions according to the present invention are excellent in all of various properties such as handwriting fastness, dispersion stability, dry-up resistance, handwriting density, and low viscosity.

## Claims

1. A water-based ink composition for writing instruments,
comprising a self-dispersible pigment, α-glucan or an α-glucan derivative, and water.

2. The ink composition according to claim 1, wherein said α-glucan or said α-glucan derivative is α-1,4-1,6 glucan or an α-1,4-1,6 glucan derivative.

3. The ink composition according to claim 1 or 2, wherein said α-glucan or said α-glucan derivative is pullulan or a pullulan derivative.

4. The ink composition according to any one of claims 1 to 3, wherein a content of said α-glucan or said α-glucan derivative is 0.001 to 1 mass% based on a total mass of said ink composition.

5. The ink composition according to any one of claims 1 to 4, wherein said self-dispersible pigment is anionic self-dispersible carbon black.

6. The ink composition according to any one of claims 1 to 5, which has a viscosity of 50 mPa·s or less at a shear rate of 380 sec⁻¹.

7. The ink composition according to any one of claims 1 to 6, further comprising an antibacterial substance.

8. The ink composition according to any one of claims 1 to 7, wherein said antibacterial substance is phenoxyethanol.

9. The ink composition according to any one of claims 1 to 8, further comprising a surfactant, said surfactant being a nonionic surfactant.

10. A writing instrument containing said ink composition according to any one of claims 1 to 9.

11. The writing instrument according to claim 10, which has a pen core including a comb groove to temporarily store ink, an ink passageway, and an air passageway.

12. A cartridge ink for writing instruments containing said ink composition according to any one of claims 1 to 9.
